# EUROPEAN PATENT APPLICATION

(11) **EP 4 787 544 A1**
(43) Date of publication of application: **05.08.2026**
(21) Application number: 25861673.9
(22) Date of filing: 15.07.2025
(51) Int. Cl.: H01M 10/613

(54) **BATTERY AND ELECTRIC DEVICE**

(30) Priority: 11.11.2024 CN 202422751450 U
(71) Applicant: Eve Energy Co., Ltd., Huizhou, Guangdong 516006 (CN)
(72) Inventor: FU, Weiyin, Huizhou, Guangdong 516006 (CN)
(74) Representative: Nederlandsch Octrooibureau
(86) International application number: PCT/CN2025/108703
(87) International publication number: WO 2026/097923

(57) **Abstract**

The application provides a battery and an electrical device. The battery includes a first cell module, a second cell module and a cooling assembly. The first cell module includes a plurality of first battery cells. The second cell module includes a plurality of second battery cells. The second cell module is arranged opposite to the first cell module. The cooling assembly is located between the first cell module and the second cell module. The cooling assembly includes a heat conductive member, and a first cold plate and a second cold plate that are arranged opposite to each other. The heat conductive member connects the first cold plate and the second cold plate. The first cold plate abuts against the first cell module, and the second cold plate abuts against the second cell module.

## Description

This application claims the priority to and benefit of Chinese Patent Application No. 202422751450.6, filed with China Patent Office on November 11, 2024, the entire contents of which is incorporated herein by reference.

### TECHNICAL FIELD

The present application relates to the technical field of batteries, and in particular to a battery and an electrical device.

### BACKGROUND

Battery cells are the core components of a battery and are widely used in energy storage systems, transportation, consumer electronics and other fields.

### SUMMARY

There is a large temperature difference between the upper cell module and the lower cell module of the battery in the related art.

In a first aspect, the present application provides a battery, including:
a first cell module, including a plurality of first battery cells;
a second cell module, including a plurality of second battery cells, wherein the second cell module is arranged opposite to the first cell module; and
a cooling assembly, located between the first cell module and the second cell module, and including a heat conductive member and a first cold plate and a second cold plate that are arranged opposite to each other, wherein the heat conductive member connects the first cold plate and the second cold plate, the first cold plate abuts against the first cell module, and the second cold plate abuts against the second cell module.

In a second aspect, the present application provides an electrical device, including the battery described above.

### BENEFICIAL EFFECTS

In the battery according to the present application, the cooling assembly is arranged between the first cell module and the second cell module. The first cold plate of the cooling assembly can cool and dissipate heat for the first cell module, and the second cold plate of the cooling assembly can cool and dissipate heat for the second cell module, thereby realizing cooling and dissipation of heat for both the first cell module and the second cell module. The first cell module and the second cell module share a common cooling assembly, thereby simplifying the structure of the battery. The heat conductive member can conduct heat between the first cold plate and the second cold plate, so that the first cold plate and the second cold plate can exchange heat through the heat conductive member, which is conducive to uniformizing the temperature between the first cell module and the second cell module, reducing the temperature difference between the first cell module and the second cell module, improving the temperature uniformity of the battery, and helping to improve the cycle life of the battery .

### BRIEF DESCRIPTION OF THE DRAWINGS

FIG. 1 is a schematic diagram showing the structure of a battery according to an embodiment of the present application.
FIG. 2 is an exploded view of a battery according to an embodiment of the present application.
FIG. 3 is an exploded view of the cooling assembly according to an embodiment of the present application.
FIG. 4 is another exploded view of the cooling assembly according to an embodiment of the present application.
FIG. 5 is a schematic diagram showing a partial structure of a battery according to an embodiment of the present application.
FIG. 6 is another schematic diagram showing a partial structure of a battery according to an embodiment of the present application.

### DETAILED DESCRIPTION OF THE EMBODIMENTS

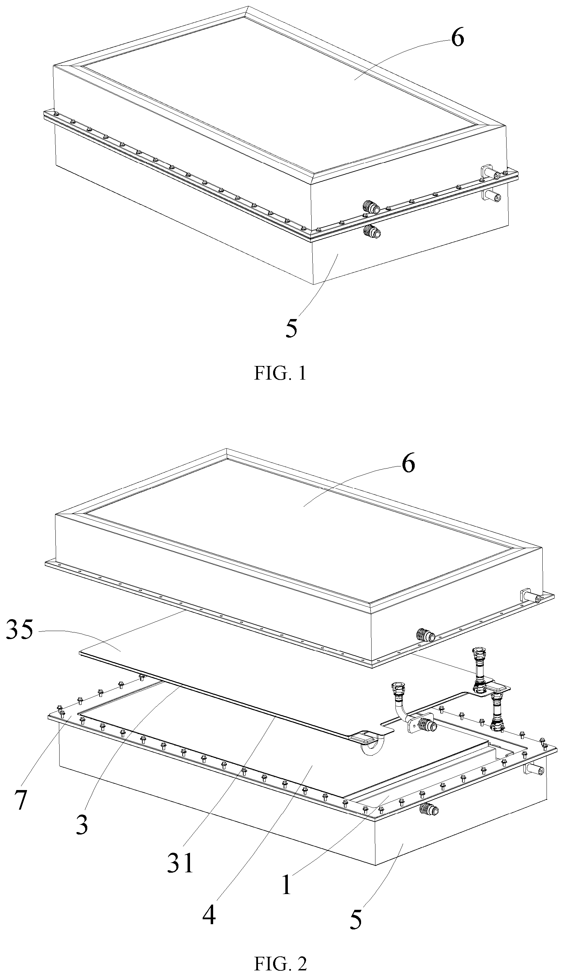

The present application discloses a battery. As shown in FIGs. 1, 2, 3 and 4, the battery includes a first cell module 1, a second cell module 2 and a cooling assembly 3. The first cell module 1 includes a plurality of first battery cells. The second cell module 2 includes a plurality of second battery cells. The second cell module 2 is arranged opposite to the first cell module 1. The cooling assembly 3 is located between the first cell module 1 and the second cell module 2. The cooling assembly 3 includes a heat conductive member 31, and a first cold plate 34 and a second cold plate 35 that are arranged opposite to each other. The heat conductive member 31 connects the first cold plate 34 and the second cold plate 35. The first cold plate 34 abuts against the first cell module 1, and the second cold plate 35 abuts against the second cell module 2.

In the battery according to an embodiment of the present application, the cooling assembly 3 is arranged between the first cell module 1 and the second cell module 2, the first cold plate 34 of the cooling assembly 3 can cool and dissipate heat for the first cell module 1, and the second cold plate 35 of the cooling assembly 3 can cool and dissipate heat for the second cell module 2, so as to realize cooling and dissipation of heat for both the first cell module 1 and the second cell module 2, and the first cell module 1 and the second cell module 2 share a common cooling assembly 3, which simplifies the structure of the battery. The heat conductive member 31 can conduct heat between the first cold plate 34 and the second cold plate 35, so that the first cold plate 34 and the second cold plate 35 can exchange heat through the heat conductive member 31, which is conducive to uniform temperature between the first cell module 1 and the second cell module 2, reducing the temperature difference between the first cell module 1 and the second cell module 2, improving the temperature uniformity of the battery, and helping to improve the cycle life of the battery.

It can be understood that the first cold plate 34 and the second cold plate 35 can both cool and dissipate heat for the first cell module 1. In addition, the first cold plate 34 and the second cold plate 35 can both cool and dissipate heat for the second cell module 2, thereby reducing the temperature difference between the first cell module 1 and the second cell module 2, improving the temperature uniformity of the battery, and facilitating improving the cycle life of the battery.

Exemplarily, the cooling assembly 3 may be integrally formed or may be formed by assembling different components.

In some examples, the heat conductive member 31 is, for example, a heat conductive structural adhesive or a heat conductive gasket.

In some examples, the heat conductive member 31 is located between the first cold plate 34 and the second cold plate 35 to connect the first cold plate 34 and the second cold plate 35. The heat conductive member 31 may be located on one side of the first cold plate 34 and the second cold plate 35, for example, at the side wall surface of the first cold plate 34, and the heat conductive member 31 connects the side wall surfaces of the first cold plate 34 and the second cold plate 35.

In some embodiments, the heat conductive member 31 is located between the first cold plate 34 and the second cold plate 35, wherein the orthographic projection of the first cold plate 34 on the first cell module 1 overlaps with the orthographic projection of the heat conductive member 31 on the first cell module 1.

It can be understood that the orthographic projection of the first cold plate 34 on the first cell module 1 overlaps with the orthographic projection of the heat conductive member 31 on the first cell module 1, that is, the first cold plate 34 overlaps with the end face of the first cell module 1 facing the first cold plate 34, thereby ensuring the contact area between the first cold plate 34 and the first cell module 1, so that the first cold plate 34 can effectively cool and dissipate the first cell module 1.

In some embodiments, the heat conductive member 31 is located between the first cold plate 34 and the second cold plate 35, wherein the orthographic projection of the second cold plate 35 on the second cell module 2 overlaps with the orthographic projection of the heat conductive member 31 on the second cell module 2.

It can be understood that the orthographic projection of the second cold plate 35 on the second cell module 2 overlaps with the orthographic projection of the heat conductive member 31 on the second cell module 2, that is, the second cold plate 35 overlaps with the end face of the second cell module 2 facing the second cold plate 35, thereby ensuring the contact area between the second cold plate 35 and the second cell module 2, so that the second cold plate 35 can effectively cool and dissipate the second cell module 2.

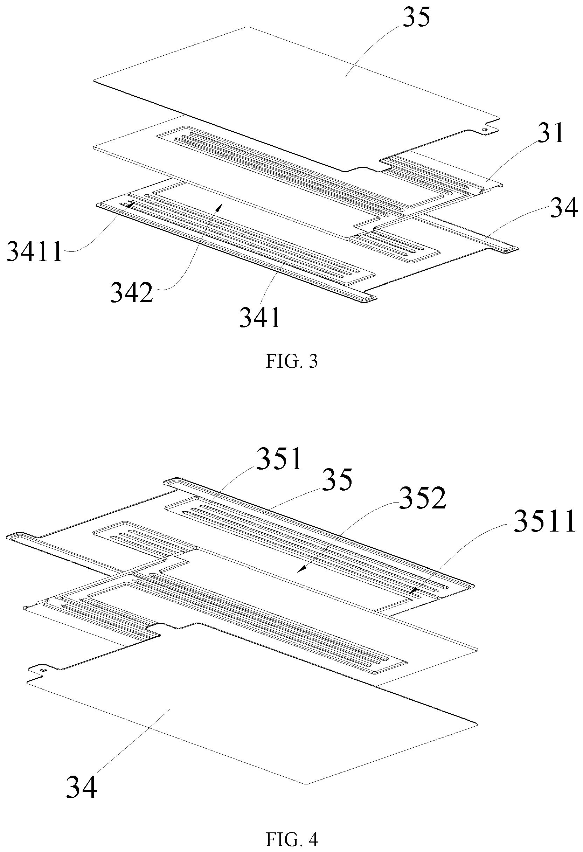

In some embodiments, as shown in FIG. 3, the first cold plate 34 is formed with at least two groups of first flow channel 341, a first accommodation space 342 is provided between two adjacent groups of first flow channel 341, and a portion of the heat conductive member 31 is located in the first accommodation space 342.

It can be understood that at least two groups of first flow channel 341 are connected in sequence, and a portion of the heat conductive member 31 is provided in the first accommodation space 342 between two adjacent groups of first flow channel 341, so that the heat conductive member 31 can improve the temperature uniformity between the two adjacent groups of first flow channel 341, and the first cold plate 34 can evenly dissipate heat from the first cell module 1. In addition, since the heat conductive member 31 connects the first cold plate 34 and the second cold plate 35, the heat conductive member 31 allows each group of first flow channel 341 to exchange heat with the second cold plate 35, thereby improving the temperature uniformity between the first cold plate 34 and the second cold plate 35, thereby reducing the temperature difference between the first cell module 1 and the second cell module 2, improving the temperature uniformity of the battery, and facilitating the improvement of the cycle life of the battery.

In some embodiments, as shown in FIG. 3, the group of first flow channel 341 includes at least two first cooling channels 3411, and a portion of the heat conductive member 31 is located between two adjacent first cooling channels 3411.

It can be understood that at least two first cooling channels 3411 are connected in sequence, and a portion of the heat conductive member 31 is arranged between two adjacent first cooling channels 3411, so that the heat conductive member 31 can improve the temperature uniformity between the two adjacent first cooling channels 3411, and the first cold plate 34 can evenly dissipate heat from the first cell module 1. In addition, since the heat conductive member 31 connects the first cold plate 34 and the second cold plate 35, the heat conductive member 31 can allow each first cooling channel 3411 to exchange heat with the second cold plate 35, thereby improving the temperature uniformity between the first cold plate 34 and the second cold plate 35, thereby reducing the temperature difference between the first cell module 1 and the second cell module 2, improving the temperature uniformity of the battery, and facilitating the improvement of the cycle life of the battery.

In some embodiments, as shown in FIG. 4, the second cold plate 35 is formed with at least two groups of second flow channel 351, wherein a second accommodation space 352 is provided between two adjacent groups of second flow channel 351, and a portion of the heat conductive member 31 is located in the second accommodation space 352.

It can be understood that at least two groups of second flow channel 351 are connected in sequence, and a portion of the heat conductive member 31 is provided in the second accommodation space 352 between two adjacent groups of second flow channel 351, so that the heat conductive member 31 can improve the temperature uniformity between the two adjacent groups of second flow channel 351, and the second cold plate 35 can evenly dissipate heat from the second cell module 2. In addition, since the heat conductive member 31 connects the first cold plate 34 and the second cold plate 35, the heat conductive member 31 can allow each group of second flow channel 351 to exchange heat with the first cold plate 34, thereby improving the temperature uniformity between the first cold plate 34 and the second cold plate 35, reducing the temperature difference between the first cell module 1 and the second cell module 2, improving the temperature uniformity of the battery, and helping to improve the cycle life of the battery.

In some embodiments, as shown in FIG. 4, the group of second flow channel 351 includes at least two second cooling channels 3511, and a portion of the heat conductive member 31 is located between two adjacent second cooling channels 3511.

It can be understood that at least two second cooling channels 3511 are connected in sequence, and a portion of the heat conductive member 31 is arranged between two adjacent second cooling channels 3511, so that the heat conductive member 31 can improve the temperature uniformity between the two adjacent second cooling channels 3511, and the second cold plate 35 can evenly dissipate heat from the second cell module 2. In addition, since the heat conductive member 31 connects the first cold plate 34 and the second cold plate 35, the heat conductive member 31 can allow each second cooling channel 3511 to exchange heat with the first cold plate 34, thereby improving the temperature uniformity between the first cold plate 34 and the second cold plate 35, thereby reducing the temperature difference between the first cell module 1 and the second cell module 2, improving the temperature uniformity of the battery, and facilitating the improvement of the cycle life of the battery.

In some embodiments, at least two groups of first flow channel 341 and at least two groups of second flow channel 351 are arranged alternately, which can effectively improve the cooling uniformity of the cooling assembly 3, so that the cooling assembly 3 can evenly dissipate heat from the first cell module 1 and the second cell module 2, thereby reducing the temperature difference between the first cell module 1 and the second cell module 2.

In some embodiments, the battery further includes a first heat-conducting layer 4, which is disposed between the first cell module 1 and the cooling assembly 3, and the first heat-conducting layer 4 connects the first cell module 1 and the first cold plate 34.

It can be understood that the first heat-conducting layer 4 can improve the heat transfer efficiency between the first cell module 1 and the cooling assembly 3, so that the cooling assembly 3 can effectively cool and dissipate heat for the first cell module 1.

Exemplarily, the first heat-conducting layer 4 is, for example, a heat-conducting structural adhesive or a heat-conducting gasket.

In some embodiments, the battery further includes a second heat-conducting layer, which is disposed between the second cell module 2 and the cooling assembly 3, and the second heat-conducting layer connects the second cell module 2 and the second cold plate 35.

It can be understood that the second heat-conducting layer can improve the heat transfer efficiency between the second cell module 2 and the cooling assembly 3, so that the cooling assembly 3 can effectively cool and dissipate heat for the second cell module 2.

Exemplarily, the second heat-conducting layer is, for example, a heat-conducting structural adhesive or a heat-conducting gasket.

In some embodiments, as shown in FIGs. 1, 2, 5 and 6, the battery also includes a first case 5 and a second case 6. The first case 5 forms a first installation cavity 51, and the first cell module 1 is installed in the first installation cavity 51. The second case 6 forms a second installation cavity 61, and the second cell module 2 is installed in the second installation cavity 61.

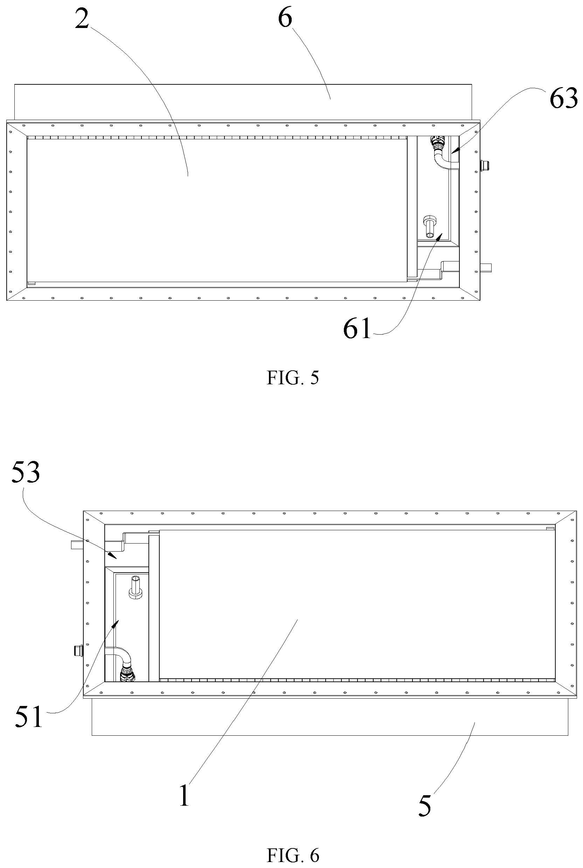

In some examples, as shown in FIG. 6, a third cooling channel is formed on at least one inner wall surface of the first case 5. It is understandable that the inner wall surface formed with the cooling channel is in contact with the first cell module 1, so that the inner wall surface can cool and dissipate heat from the first cell module 1, that is, at least two ends of the first cell module 1 have cooling structures, so that the first cell module 1 will be dissipated by both the first cold plate 34 and the inner wall surface of the first case 5, realizing multi-end heat dissipation of the first cell module 1, improving the temperature uniformity of the first cell module 1, reducing the temperature difference between different ends of the first cell module 1, and facilitating increasing the cycle life of the first cell module 1.

In addition, the third cooling channel is directly formed on the inner wall surface of the first case 5, instead of additionally forming a cooling assembly on the first case 5, so that the inner wall surface of the first case 5 is reused and the structure of the first case 5 is simplified. For example, a cold plate is used as the side wall or bottom wall of the first case 5, and the cold plate is formed with the third cooling channel.

Exemplarily, a third cooling channel is formed on the inner bottom wall of the first case 5. The inner bottom wall of the first case 5 can cool the bottom of the first cell module 1, and the first cold plate 34 can cool the top of the first cell module 1, thereby reducing the temperature difference between the upper and lower ends of the first cell module 1, which is beneficial to increasing the cycle life of the first cell module 1 and reducing the risk of thermal runaway.

The battery further includes a third heat-conducting layer, which is disposed between the inner bottom wall of the first case 5 and the first cell module 1, and the third heat-conducting layer connects the inner bottom wall of the first case 5 and the first cell module 1. The third heat-conducting layer can improve the heat transfer efficiency between the inner bottom wall of the first case 5 and the first cell module 1, so that the inner bottom wall of the first case 5 can effectively cool and dissipate heat from the first cell module 1.

Exemplarily, the third heat-conducting layer is, for example, a heat-conducting structural adhesive or a heat-conducting gasket.

Exemplarily, the first case 5 includes four side walls and a cold plate as a bottom wall. The four side walls and the cold plate are surrounded to form the first case 5, and an anti-expansion beam is provided between two oppositely arranged side walls. The cold plate and the four side walls are connected by stir friction welding.

In some examples, as shown in FIG. 5, a fourth cooling channel is formed on at least one inner wall surface of the second case 6. It is understandable that the inner wall surface formed with the fourth cooling channel is in contact with the second cell module 2, so that the inner wall surface of the second case 6 can cool and dissipate heat from the second cell module 2, that is, at least two ends of the second cell module 2 have cooling structures, so that the second cell module 2 will be cooled by both the inner wall surface of the second case 6 and the second cold plate 35, realizing multi-end heat dissipation of the second cell module 2, improving the temperature uniformity of the second cell module 2, reducing the temperature difference between different ends of the second cell module 2, and facilitating increasing the cycle life of the second cell module 2.

In addition, the fourth cooling channel is directly formed on the inner wall surface of the second case 6, instead of additionally forming a cooling assembly on the second case 6, so that the inner wall surface of the second case 6 is reused and the structure of the second case 6 is simplified. For example, a cold plate is used as the side wall or bottom wall of the second case 6, and the cold plate is formed with the fourth cooling channel.

Exemplarily, a fourth cooling channel is formed on the inner bottom wall of the second case 6. The inner bottom wall of the second case 6 can cool the bottom of the second cell module 2, and the inner bottom wall of the second case 6 can cool the top of the second cell module 2, which reduces the temperature difference between the upper and lower ends of the second cell module 2, is conducive to increasing the cycle life of the second cell module 2, and reduces the risk of thermal runaway.

The battery further includes a fourth heat-conducting layer, which is disposed between the inner bottom wall of the second case 6 and the second cell module 2, and the fourth heat-conducting layer connects the inner bottom wall of the second case 6 and the second cell module 2. The fourth heat-conducting layer can improve the heat transfer efficiency between the inner bottom wall of the second case 6 and the second cell module 2, so that the inner bottom wall of the second case 6 can effectively cool and dissipate the second cell module 2.

The fourth heat-conducting layer is, for example, a heat-conducting structural adhesive or a heat-conducting gasket.

Exemplarily, the second case 6 includes four side walls and a cold plate as a bottom wall. The four side walls and the cold plate are surrounded to form the second case 6, and an anti-expansion beam is provided between two oppositely arranged side walls. The cold plate and the four side walls are connected by stir friction welding.

In some embodiments, as shown in FIGs. 5 and 6, a first opening 53 communicating with the first installation cavity 51 is formed at one end of the first case 5, and a second opening 63 communicating with the second installation cavity 61 is formed at one end of the second case 6. The one end of the first case 5 is connected to the one end of the second case 6, and the first opening 53 and the second opening 63 are arranged opposite to each other.

It can be understood that the first cell module 1 can be installed in the first installation cavity 51 through the first opening 53, and the second cell module 2 can be installed in the second installation cavity 61 through the second opening 63. The second case 6 is covered on the first case 5, and the first case 5 and the second case 6 are connected to complete the battery assembly.

The second opening 63 of the second case 6 is opposite to the first opening 53 of the first case 5, so that the first case 5 and the second case 6 do not need to be provided with a top cover, thereby simplifying the structure of the battery.

In some embodiments, as shown in FIG. 2, the battery further includes a seal 7, which is disposed at the connection between the first case 5 and the second case 6.

It can be understood that the seal 7 can improve the sealing performance of the connection between the first case 5 and the second case 6, thereby improving the sealing performance of the battery.

Exemplarily, the seal 7 is, for example, a sealing ring or a sealant.

An embodiment of the present application also discloses an electrical device, including the above-mentioned battery.

In the electrical device according to the embodiment of the present application, the cooling assembly 3 is arranged between the first cell module 1 and the second cell module 2, the first cold plate 34 of the cooling assembly 3 can cool and dissipate the first cell module 1, and the second cold plate 35 of the cooling assembly 3 can cool and dissipate the second cell module 2, so as to realize cooling and dissipating both the first cell module 1 and the second cell module 2, and the first cell module 1 and the second cell module 2 share a common cooling assembly 3, which simplifies the structure of the battery. The heat conductive member 31 can conduct heat between the first cold plate 34 and the second cold plate 35, so that the first cold plate 34 and the second cold plate 35 can exchange heat by the heat conductive member 31, which is conducive to uniformizing the temperature between the first cell module 1 and the second cell module 2, reducing the temperature difference between the first cell module 1 and the second cell module 2, improving the temperature uniformity of the battery, and is conducive to improving the cycle life of the battery, thereby improving the endurance of the electrical device.

It should be noted that the electrical device may be a vehicle, an aircraft, or a household appliance. It should be noted that the above is only an example of an electrical device and does not specifically limit the electrical device.

## Claims

1. A battery, comprising:
a first cell module, comprising a plurality of first battery cells;
a second cell module, comprising a plurality of second battery cells, the second cell module being arranged opposite to the first cell module; and
a cooling assembly, located between the first cell module and the second cell module, and comprising a heat conductive member, a first cold plate and a second cold plate, wherein the first cold plate and the second cold plate are arranged opposite to each other, the heat conductive member connects the first cold plate and the second cold plate, the first cold plate abuts against the first cell module, and the second cold plate abuts against the second cell module.

2. The battery according to claim 1, wherein the heat conductive member is located between the first cold plate and the second cold plate, wherein:
an orthographic projection of the first cold plate on the first cell module overlaps with an orthographic projection of the heat conductive member on the first cell module; and/or
an orthographic projection of the second cold plate on the second cell module overlaps with an orthographic projection of the heat conductive member on the second cell module.

3. The battery according to claim 1, wherein the first cold plate is formed with at least two groups of first flow channel, wherein:
a first accommodation space is provided between adjacent two of the at least two groups of first flow channel, and a portion of the heat conductive member is located in the first accommodation space; and/or
the at least two groups of first flow channel each comprise at least two first cooling channels, and a portion of the heat conductive member is located between adjacent two of the at least two first cooling channels.

4. The battery according to claim 3, wherein the first cold plate is formed with at least two groups of first flow channel, the second cold plate is formed with at least two groups of second flow channel, and the at least two groups of first flow channel and the at least two groups of second flow channel are alternately arranged.

5. The battery according to claim 4, wherein a first accommodation space is provided between adjacent two of the at least two groups of first flow channel, and a portion of the heat conductive member is located in the first accommodation space; and/or
the at least two groups of first flow channel each comprise at least two first cooling channels, and a portion of the heat conductive member is located between adjacent two of the at least two first cooling channels; and/or
a second accommodation space is provided between adjacent two of the at least two groups of second flow channel, and a portion of the heat conductive member is located in the second accommodation space; and/or
the at least two groups of second flow channel each comprise at least two second cooling flow channels, and a portion of the heat conductive member is located between adjacent two of the at least two second cooling channels.

6. The battery according to any one of claims 1 to 5, wherein the battery further comprises a first heat-conducting layer arranged between the first cell module and the cooling assembly and connecting the first cell module and the first cold plate; and/or
wherein the battery further comprises a second heat-conducting layer arranged between the second cell module and the cooling assembly and connecting the second cell module and the second cold plate.

7. The battery according to any one of claims 1 to 5, further comprising a first case and a second case, the first case forming a first installation cavity in which the first cell module is installed, the second case forming a second installation cavity in which the second cell module is installed.

8. The battery according to claim 7, wherein a third cooling channel is formed on at least one inner wall surface of the first case, and/or a fourth cooling channel is formed on at least one inner wall surface of the second case.

9. The battery according to claim 8, wherein the third cooling channel is formed on an inner bottom wall of the first case, and the fourth cooling channel is formed on an inner bottom wall of the second case.

10. The battery according to claim 8, further comprising a third heat-conducting layer arranged between and connecting an inner bottom wall of the first case and the first cell module; and/or
wherein the battery further comprises a fourth heat-conducting layer arranged between and connecting an inner bottom wall of the second case and the second cell module.

11. The battery according to claim 7, wherein a first opening in communication with the first installation cavity is formed at an end of the first case, a second opening communicating with the second installation cavity is formed at an end of the second case, the end of the first case is connected to the end of the second case, the first opening and the second opening are arranged opposite to each other, the first case closes the second opening, and the second case closes the first opening.

12. The battery according to claim 11, further comprising a seal arranged at a connection between the first case and the second case.

13. An electrical device, comprising the battery according to any one of claims 1 to 12.
